# EUROPÄISCHE PATENTSCHRIFT

(11) **EP 3 167 551 B1**
(45) Veröffentlichungstag und Bekanntmachung des Hinweises auf die Patenterteilung: **13.11.2019**
(21) Anmeldenummer: 15725497.0
(22) Anmeldetag: 17.04.2015
(51) Int. Cl.: H03M 1/00, G01C 19/5726

(54) **STEUERVORRICHTUNG UND VERFAHREN ZUR MINIMIERUNG VON SKALENFAKTORFEHLERN EINES DREHRATENSENSORS**
CONTROLLER AND METHOD FOR MINIMIZING SCALE FACTOR ERRORS OF A ROTATION RATE SENSOR
DISPOSITIF DE COMMANDE ET PROCÉDÉ POUR RENDRE MINIMALES LES ERREURS DE FACTEUR D'ÉCHELLE D'UN CAPTEUR DE VITESSE DE ROTATION

(30) Priorität: 07.07.2014 DE 102014010056
(43) Veröffentlichungstag der Anmeldung: 17.05.2017
(73) Patentinhaber: Northrop Grumman LITEF GmbH, 79115 Freiburg (DE)
(72) Erfinder: OHMBERGER, Ralf Richard, 79211 Denzlingen (DE); ZIMMERMANN, Steffen, 79331 Teningen (DE)
(74) Vertreter: Müller Hoffmann & Partner
(86) Internationale Anmeldenummer: PCT/EP2015/000816
(87) Internationale Veröffentlichungsnummer: WO 2016/005015

(56) Entgegenhaltungen:
- DE-T2- 69 312 011
- US-A1- 2009 212 983

## Beschreibung

Die Erfindung bezieht sich auf eine Vorrichtung zur Minimierung eines durch Referenzspannungen bedingten Skalenfaktorfehlers eines Drehratensensors und ein Verfahren zur Minimierung des Skalenfaktorfehlers.

In vielen Sensoren der heutigen Technik werden Regelkreise verwendet, um einzelne Bauteile der Sensoren anzusteuern und auf bestimmte Werte einzuregeln. Dabei ist es häufig nötig, eine digitale Regelgröße in ein analoges Signal umzuwandeln, mit dem ein zu regelndes Bauteil direkt angesteuert werden kann. Genauso kann es notwendig sein, ein analoges Messsignal, das die Reaktion des Bauteils auf das analoge Steuersignal wiedergibt, in ein digitales Signal umzuwandeln, das mit der Regelgröße verglichen werden kann. Dazu werden in den Sensoren Digital-Analog-Wandler und/oder Analog-Digital-Wandler zum Umwandeln der digitalen in analoge und der analogen in digitale Signale eingesetzt.

Druckschrift DE 693 12 011 T2 beschreibt einen kombinierten Regelkreis zum Regeln von mehreren Phasenmodulatoren eines Sagnac-Interferometers mittels einer einzigen Regelstrecke. Die Signale der Sagnac Kreisel werden zeitversetzt über einen Analog-Digital-Wandler an eine Steuereinheit weitergegeben, die entsprechend zeitversetzte Steuersignale ausgibt. Gemäß einer gezeigten Ausführungsform wird in jedem Signalzweig ein eigener Digital-Analog-Wandler vorgehalten.

Die Digital-Analog- und Analog-Digital-Wandler benutzen Referenzspannungen, um die digitalen und/oder analogen Signale abzutasten und umzuwandeln. Typischerweise werden die Digital-Analog- und/oder Analog-Digital-Wandler als vorgefertigte Bauteile in die Sensoren eingefügt. Hierbei tritt das Problem auf, dass die von den Wandlern benutzten Referenzspannungen zeitlich nicht konstant sind, sondern alterungsbedingt im Laufe der Zeit höhere oder niedrigere Werte annehmen können. Eine inhärente Fehlerquelle für den Betrieb von Sensoren, die auf Digital-Analog- und/oder Analog-Digital-Wandler angewiesen sind, besteht damit in der Alterung der von diesen Wandlern benutzten Referenzspannungen. Die Messgenauigkeit eines Sensors wird direkt durch die Alterung der Referenzspannungen beeinträchtigt, wenn diese als Skalenfaktor in eine von dem Sensor ausgeführte Berechnung des Messwerts eingehen.

Es ist deshalb erstrebenswert, eine Vorrichtung bereitzustellen, die einen durch die Alterung von Referenzspannungen bedingten Skalenfaktorfehler minimiert. Ebenso ist es erstrebenswert, ein Verfahren zur Minimierung eines solchen Skalenfaktorfehlers anzugeben.

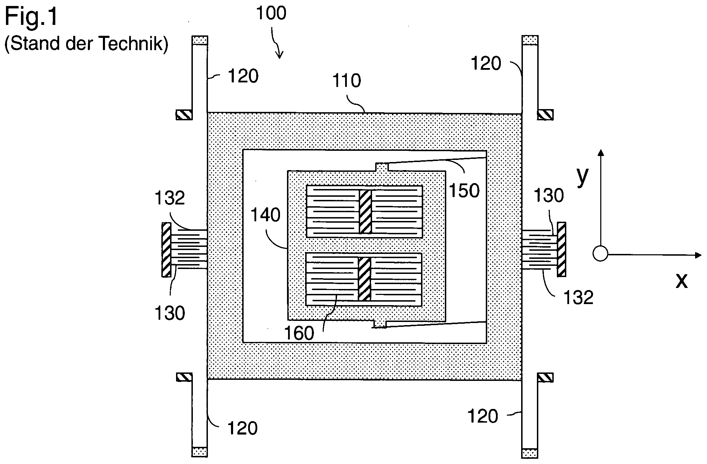

Insbesondere im Bereich von Drehratensensoren werden heutzutage Digital-Analog-Wandler und Analog-Digital-Wandler verwendet. Fig. 1 zeigt ein schematisches Blockdiagramm eines Drehratensensors 100. Der Drehratensensor 100 weist eine Anregemasse 110 auf, die über erste Federelemente 120 mit einem Substrat verbunden sind. Die Federelemente 120 sind derart ausgebildet, dass die Anregemasse 110 bezüglich des Substrats in eine erste Richtung schwingen kann, wohingegen eine Schwingung in eine zur ersten Richtung senkrechte zweite Richtung durch die spezielle Form der ersten Federelemente 120 verhindert wird. Gemäß dem in Fig. 1 dargestellten Beispiel des Drehratensensors 100 kann die Anregemasse 110 entlang der x-Richtung schwingen, wohingegen eine Auslenkung entlang der y-Richtung durch die zur y-Richtung parallele Form der ersten Federelemente 120 verhindert wird.

Typischerweise wird im Drehratensensor 100 die Schwingung der Anregemasse 110 entlang der x-Richtung durch Anregeelektroden 130 erzeugt. Die Schwingung wird durch Anlegen einer speziellen, zur Anregung geeigneten Spannungsform an die Anregeelektroden 130 angeregt. Zum Beispiel führt das Anlegen einer Wechselspannung an die Anregeelektroden 130 zu einer wechselnden elektrostatischen Anziehung zwischen den Anregeelektroden 130 und Elektroden 132, die mit der Anregemasse 110 verbunden sind. Dadurch wird die Schwingung entlang der x-Achse angeregt.

Eine Auslesemasse 140 ist über zweite Federelemente 150 mit der Anregemasse 110 verbunden. Die zweiten Federelemente 150 sind derart ausgebildet, dass die Auslesemasse 140 entlang der zur ersten Richtung senkrechten zweiten Richtung schwingen kann, wohingegen eine Schwingung der Auslesemasse 140 gegenüber der Anregemasse 110 entlang der ersten Richtung durch die Form der zweiten Federelemente 150 verhindert wird. In dem in Fig. 1 dargestellten Beispiel kann die Auslesemasse 140 entlang der y-Richtung, aber nicht entlang der x-Richtung ausgelenkt werden. Eine Auslenkung der Auslesemasse 140 wird durch die Veränderung einer an Ausleseelektroden 160 angelegten Spannung detektiert. Die Veränderung der Spannung an den Ausleseelektroden 160 gibt Aufschluss über Frequenz und Amplitude der Schwingung der Auslesemasse 140.

Das Funktionsprinzip eines gemäß des Blockdiagramms aus Fig. 1 aufgebauten Drehratensensors 100 besteht darin, die Anregemasse 110 entlang der x-Richtung eine genau definierte Schwingung ausführen zu lassen. Wird der Drehratensensor 100 um eine zur x- und y-Richtung senkrecht stehende Richtung gedreht, wird eine Corioliskraft erzeugt, die die Auslesemasse 140 mit Bezug auf die Anregemasse 110 entlang der y-Richtung auslenkt. Diese Auslenkung ist proportional zur Drehrate. Über die Ausleseelektroden 160, mit denen die Schwingung der Auslesemasse 140 detektiert werden kann, kann somit auf die Drehrate der Drehung um die zur x- und y-Richtung senkrechte Richtung geschlossen werden.

Um eine möglichst große Spanne von Drehraten messen zu können und um möglichst große Linearität zu erreichen, wird der Drehratensensor 100 typischerweise derart ausgelesen, dass eine Spannung an die Ausleseelektroden 160 angelegt wird, die einer Schwingung der Auslesemasse 140 gegenüber der Anregemasse 110 entgegenwirkt. Wenn die Größe der entgegenwirkenden Spannung derart eingestellt ist, dass trotz einer Drehung keine Schwingung der Auslesemasse 140 erfolgt, kann über die angelegte Spannung die Drehrate bestimmt werden. Das Anlegen der die Kräfte kompensierenden Spannung kann im Zeitmultiplex zur Auslesung über dieselbe Ausleseelektrode 160 oder über separate Ausleseelektrode(n) 160 erfolgen.

Es werden also in einem Drehratensensor 100 gemäß dem Stand der Technik zwei Schwingungen über Regelkreise angesteuert. Zum einen wird die Schwingung der Anregemasse 110 entlang der x-Richtung über die Anregeelektroden 130 auf einen zuvor festgelegten Wert eingestellt. Zum anderen wird über die Ausleseelektroden 160 die Schwingung der Auslesemasse 140 unterdrückt, das heißt, auf eine Amplitude der Größe Null geregelt.

Dazu werden üblicherweise zwei Regelkreise verwendet, die jeweils einen Digital-Analog-Wandler und einen Analog-Digital-Wandler aufweisen. Jeder dieser Wandler wird mit einer Referenzspannung betrieben. Die Werte der Referenzspannungen treten in einem Skalenfaktor auf, der den Zusammenhang zwischen der notwendigerweise an die Ausleseelektroden anzulegenden Spannung und der Drehrate angibt. Eine Änderung der Referenzspannungen aufgrund von Alterung wirkt sich deshalb direkt auf den Skalenfaktor und damit auf die Messgenauigkeit des Drehratensensors aus. Im ungünstigsten Fall, das heißt, wenn die Referenzspannungen derart altern, dass sich alterungsabhängige Fehler kumulieren, kann ein Fehler, der durch die Änderung der Referenzspannungen hervorgerufen wird, mit der vierten Potenz eingehen.

Der Erfindung liegt die Aufgabe zu Grunde, eine Steuervorrichtung zum Steuern eines Drehratensensors anzugeben, in der der Skalenfaktorfehler aufgrund von Änderungen von Referenzspannungen, z.B. wegen Alterung, minimiert werden kann.

Diese Aufgabe wird durch den Gegenstand der unabhängigen Patentansprüche gelöst. Weiterbildungen werden durch den Gegenstand der abhängigen Patentansprüche angegeben.

Eine Steuervorrichtung zum Steuern eines Drehratensensors weist einen ersten Regelkreis und einen zweiten Regelkreis auf. Der erste Regelkreis weist eine erste Reglereinheit zum Steuern einer Schwingung des Drehratensensors entlang einer ersten Richtung auf. Zudem weist der erste Regelkreis einen ersten Digital-Analog-Wandler zum Umwandeln eines von der ersten Reglereinheit ausgegebenen ersten digitales Steuersignals in ein erstes analoges Signal auf, mit dem die Schwingung des Drehratensensors entlang der ersten Richtung gesteuert wird. Des Weiteren weist der erste Regelkreis einen ersten Analog-Digital-Wandler zum Umwandeln eines ersten analogen Messsignals, das die Schwingung des Drehratensensors entlang der ersten Richtung beschreibt, in ein erstes digitales Auslesesignal auf, das der ersten Reglereinheit zugeführt wird. Der zweite Regelkreis weist eine zweite Reglereinheit zum Steuern einer Schwingung des Drehratensensors entlang einer von der ersten Richtung verschiedenen zweiten Richtung auf. Zudem weist der zweite Regelkreis einen zweiten Digital-Analog-Wandler zum Umwandeln eines von der zweiten Reglereinheit ausgegebenen zweiten digitalen Steuersignals in ein zweites analoges Signal auf, mit dem die Schwingung des Drehratensensors entlang der zweiten Richtung gesteuert wird. Hierbei arbeiten der erste Digital-Analog-Wandler, der zweite Digital-Analog-Wandler und der erste Analog-Digital-Wandler beim Umwandeln mit je einer Referenzspannung. Zudem sind wenigstens zwei der Referenzspannungen des ersten Digital-Analog-Wandlers, des zweiten Digital-Analog-Wandlers und des ersten Analog-Digital-Wandlers voneinander abhängig.

Des Weiteren werden die oben genannten Aufgaben durch ein Verfahren zum Steuern eines Drehratensensors gelöst. In einem ersten Regelkreis weist das Verfahren die Schritte auf: mit einem ersten Digital-Analog-Wandler Umwandeln eines von einer ersten Reglereinheit zum Steuern einer Schwingung des Drehratensensors entlang einer ersten Richtung ausgegebenen ersten digitalen Steuersignals in ein erstes analoges Signal, mit dem die Schwingung des Drehratensensors entlang der ersten Richtung gesteuert wird, und mit einem ersten Analog-Digital-Wandler Umwandeln eines ersten analogen Messsignals, das die Schwingung des Drehratensensors entlang der ersten Richtung beschreibt, in ein erstes digitales Auslesesignal, das der ersten Reglereinheit zugeführt wird. In einem zweiten Regelkreis weist das Verfahren die Schritte auf: mit einem zweiten Digital-Analog-Wandler Umwandeln eines von einer zweiten Reglereinheit zum Steuern einer Schwingung des Drehratensensors entlang einer von der ersten Richtung verschiedenen zweiten Richtung ausgegebenen zweiten digitalen Steuersignals in ein zweites analoges Signal, mit dem die Schwingung des Drehratensensors entlang der zweiten Richtung gesteuert wird. Hierbei arbeiten der erste Digital-Analog-Wandler, der zweite Digital-Analog-Wandler und der erste Analog-Digital-Wandler beim Umwandeln mit je einer Referenzspannung. Das Verfahren weist zudem den Schritt auf: Einstellen von wenigstens zwei der Referenzspannungen des ersten Digital-Analog-Wandlers, des zweiten Digital-Analog-Wandlers und des ersten Analog-Digital-Wandlers derart, dass sie voneinander abhängig sind.

Durch diese Ausgestaltung einer Steuervorrichtung wird erreicht, dass sich bei einer Änderung der Referenzspannungen des ersten Digital-Analog-Wandlers, des zweiten Digital-Analog-Wandlers und/oder des ersten Analog-Digital-Wandlers, z.B. aufgrund von Alterung, die nachteiligen Effekte der Änderung durch Kompensation aufgrund der gegenseitigen Abhängigkeit von wenigstens zwei der Referenzspannungen im Skalenfaktor aufheben. Dadurch wird die Abhängigkeit des Skalenfaktors z.B. von der Alterung der Referenzspannungen weniger stark abhängig und eine größere Genauigkeit und Verlässlichkeit des Drehratensensors kann erreicht werden.

Die Abhängigkeit des Skalenfaktors von der Änderung der Referenzspannungen, z.B. aufgrund von Alterung, kann dadurch von der vierten Potenz auf die zweite Potenz gesenkt werden. Die Abhängigkeit des Skalenfaktors von Alterungseffekten kann auch ganz vermieden werden.

Es können auch jeweils mehr als ein erster Digital-Analog-Wandler, ein zweiter Digital-Analog-Wandler bzw. ein erster Analog-Digital-Wandler verwendet werden, z.B. zwei erste Digital-Analog-Wandler, zwei zweite Digital-Analog-Wandler bzw. zwei erste Analog-Digital-Wandler. Die Referenzspannungen dieser Wandler sind dann jeweils voneinander abhängig.

In einer Weiterbildung kann die Referenzspannung des ersten Analog-Digital-Wandlers zur Referenzspannung des zweiten Digital-Analog-Wandlers direkt proportional sein.

Dadurch wird gewährleistet, dass bei einer Änderung der Referenzspannung des ersten Analog-Digital-Wandlers, z.B. aufgrund von Alterung, die Referenzspannung des zweiten Digital-Analog-Wandlers sich in die gleiche Richtung verändert wie die Referenzspannung des ersten Analog-Digital-Wandlers. Das heißt, dass, wenn die Referenzspannung des ersten Analog-Digital-Wandlers im zeitlichen Verlauf größer wird, auch die Referenzspannung des zweiten Digital-Analog-Wandlers im Laufe der Zeit größer wird. Umgekehrt wird bei einer Verkleinerung der Referenzspannung des ersten Analog-Digital-Wandlers auch die Referenzspannung des zweiten Digital-Analog-Wandlers im Laufe der Zeit kleiner. Die Änderungsraten der Referenzspannungen können hierbei dem Verhältnis nach konstant sein. Dies führt zu einer Kompensation der Änderungseffekte innerhalb des Skalenfaktors des Drehratensensors und damit zu einer größeren Verlässlichkeit und Genauigkeit des Sensors. Der Skalenfaktor kann dadurch nur noch in der zweiten Potenz von Alterungseffekten der Referenzspannungen abhängig sein.

In einer Weiterbildung kann die Referenzspannung des ersten Analog-Digital-Wandlers zur Referenzspannung des ersten Digital-Analog-Wandlers direkt proportional sein.

Dadurch wird gewährleistet, dass bei einer Änderung der Referenzspannung des ersten Analog-Digital-Wandlers, z.B. aufgrund von Alterung, die Referenzspannung des ersten Digital-Analog-Wandlers sich in die gleiche Richtung verändert wie die Referenzspannung des ersten Analog-Digital-Wandlers. Das heißt, dass, wenn die Referenzspannung des ersten Analog-Digital-Wandlers im zeitlichen Verlauf größer wird, auch die Referenzspannung des ersten Digital-Analog-Wandlers im Laufe der Zeit größer wird. Umgekehrt wird bei einer Verkleinerung der Referenzspannung des ersten Analog-Digital-Wandlers auch die Referenzspannung des ersten Digital-Analog-Wandlers im Laufe der Zeit kleiner. Die Raten der Zunahme und/oder Abnahme der Referenzspannungen können hierbei über einen zeitlich konstanten Wert gekoppelt sein, d.h. die Änderungsraten der Referenzspannungen können dem Verhältnis nach konstant sein. Dies führt zu einer Kompensation der Änderungseffekte innerhalb des Skalenfaktors des Drehratensensors und damit zu einer größeren Verlässlichkeit und Genauigkeit des Sensors. Der Skalenfaktor kann dadurch nur noch in der zweiten Potenz von Änderungs- bzw. Alterungseffekten der Referenzspannungen abhängig sein.

In einer Weiterbildung kann die Referenzspannung des ersten Digital-Analog-Wandlers direkt proportional zur Referenzspannung des zweiten Digital-Analog-Wandlers sein und die Referenzspannung des ersten Analog-Digital-Wandlers gleichzeitig direkt proportional zur dritten Potenz der Referenzspannung des ersten Digital-Analog-Wandlers sein.

Dadurch wird gewährleistet, dass sich bei einer Änderung der Referenzspannung des ersten Digital-Analog-Wandlers, z.B. aufgrund von Alterung, die Referenzspannung des zweiten Digital-Analog-Wandlers in die gleiche Richtung verändert wie die Referenzspannung des ersten Digital-Analog-Wandlers. Das heißt, dass, wenn die Referenzspannung des ersten Digital-Analog-Wandlers im zeitlichen Verlauf größer wird, auch die Referenzspannung des zweiten Digital-Analog-Wandlers im Laufe der Zeit größer wird. Umgekehrt wird bei einer Verkleinerung der Referenzspannung des ersten Digital-Analog-Wandlers auch die Referenzspannung des zweiten Digital-Analog-Wandlers im Laufe der Zeit kleiner. Die Rate der Zunahme und/oder Abnahme der Referenzspannungen können hierbei über einen zeitlich konstanten Wert gekoppelt sein.

Gleichzeitig wird gewährleistet, dass sich bei einer Änderung der Referenzspannung des ersten Analog-Digital-Wandlers, z.B. aufgrund von Alterung, die Referenzspannung des ersten Digital-Analog-Wandlers in die gleiche Richtung und in der dritten Potenz der Referenzspannung des ersten Digital-Analog-Wandlers ändert. Das heißt, bei einer Änderung der Referenzspannung des ersten Analog-Digital-Wandlers um den Betrag Δ ändert sich bei kleinem Δ die Referenzspannung des ersten Digital-Analog-Wandlers proportional zu 3Δ.

Dies führt zu einer Kompensation der Änderungs- bzw. Alterungseffekte innerhalb des Skalenfaktors des Drehratensensors und damit zu einer größeren Verlässlichkeit und Genauigkeit des Sensors. Der Skalenfaktor kann dadurch nur noch in der zweiten Potenz von Änderungs- bzw. Alterungseffekten der Referenzspannungen abhängig sein. Die Abhängigkeit des Skalenfaktors von Änderungs- bzw. Alterungseffekten der Referenzspannungen kann dadurch aber auch gänzlich eliminiert werden.

In einer Weiterbildung kann die Referenzspannung des ersten Digital-Analog-Wandlers invers proportional zur Referenzspannung des zweiten Digital-Analog-Wandlers sein oder sich bei Alterung gegenläufig zur Referenzspannung des zweiten Digital-Analog-Wandlers ändern.

Dadurch wird gewährleistet, dass sich bei einer Änderung der Referenzspannung des ersten Digital-Analog-Wandlers, z.B. aufgrund von Alterung, die Referenzspannung des zweiten Digital-Analog-Wandlers in die entgegengesetzte Richtung verändert wie die Referenzspannung des ersten Digital-Analog-Wandlers. Das heißt, dass, wenn die Referenzspannung des ersten Digital-Analog-Wandlers im zeitlichen Verlauf größer wird, die Referenzspannung des zweiten Digital-Analog-Wandlers im Laufe der Zeit kleiner wird. Umgekehrt wird bei einer Verkleinerung der Referenzspannung des ersten Digital-Analog-Wandlers die Referenzspannung des zweiten Digital-Analog-Wandlers im Laufe der Zeit größer. Die Rate der Zunahme und Abnahme der Referenzspannungen können hierbei über einen zeitlich konstanten Wert gekoppelt sein, d.h. die Änderungsraten der Referenzspannungen können dem Verhältnis nach konstant sein. Dies führt zu einer Kompensation der Änderungs- bzw. Alterungseffekte innerhalb des Skalenfaktors des Drehratensensors und damit zu einer größeren Verlässlichkeit und Genauigkeit des Sensors. Der Skalenfaktor kann dadurch nur noch in der zweiten Potenz von Änderungs- bzw. Alterungseffekten der Referenzspannungen abhängig sein.

In einer Weiterbildung weist der zweite Regelkreis der Steuervorrichtung einen zweiten Analog-Digital-Wandler zum Umwandeln eines zweiten analogen Messsignals, das die Schwingung des Drehratensensors entlang der zweiten Richtung beschreibt, in ein zweites digitales Auslesesignal auf, das der zweiten Reglereinheit zugeführt wird. Dadurch wird gewährleistet, dass die Ausleseelektrode durch Umwandeln und Rückführen des zweiten analogen Messsignals vom zweiten Regelkreis korrekt auf die gewünschte Amplitude eingestellt werden kann. Dadurch wird ein vollwertiger Betrieb des Drehratensensors ermöglicht, indem gleichzeitig Änderungseffekte der Referenzspannungen aufgrund von Alterung auf das Messergebnis reduziert sind.

In einer Weiterbildung kann eine Drehung des Drehratensensors um eine zur ersten Richtung und zur zweiten Richtung senkrecht stehende Normale die Schwingung des Drehratensensors entlang der zweiten Richtung auslösen. Dadurch wird gewährleistet, dass sich der Drehratensensor zur Messung der Drehrate über die Corioliskraft eignet, wodurch ein Betrieb des Drehratensensors mittels Corioliskraftmessung möglich wird, in dem Änderungs- bzw. Alterungseffekte von Referenzspannungen auf das Messergebnis minimiert werden.

In einer Weiterbildung ist der Drehratensensor ein mikroelektromechanischer (MEMS) Kreisel. Dadurch können die oben geschilderten Effekte auch für den Betrieb von mikroelektromechanischen Kreiseln genutzt werden.

Im Folgenden werden anhand der Figuren Ausführungsformen der Erfindung, deren Funktionsweise, sowie deren Vorteile beschrieben. Elemente der Ausführungsformen sind miteinander kombinierbar, sofern sie sich nicht ausschließen. Es zeigen:
- **Fig. 1**: ein schematisches Blockdiagramm eines Drehratensensors gemäß dem Stand der Technik.
- **Fig. 2**: ein schematisches Blockdiagramm einer Steuervorrichtung zum Steuern eines Drehratensensors gemäß einer Ausführungsform.
- **Fig. 3**: ein schematisches Blockdiagramm einer Steuervorrichtung zum Steuern eines Drehratensensors gemäß einer weiteren Ausführungsform.
- **Fig. 4**: ein schematisches Blockdiagramm einer Steuervorrichtung zum Steuern eines Drehratensensors gemäß einer weiteren Ausführungsform.
- **Fig. 5**: eine Steuervorrichtung zum Steuern eines Drehratensensors gemäß einer weiteren Ausführungsform.
- **Fig. 6**: ein schematisches Blockdiagramm einer Steuervorrichtung zum Steuern eines Drehratensensors gemäß einer weiteren Ausführungsform.
- **Fig. 7**: eine schematisches Flussdiagramm eines Verfahrens zum Steuern eines Drehratensensors gemäß einer Ausführungsform.

In den Figuren sind einander entsprechende Bauteile bzw. Bauteilgruppen mit denselben Bezugszeichen gekennzeichnet.

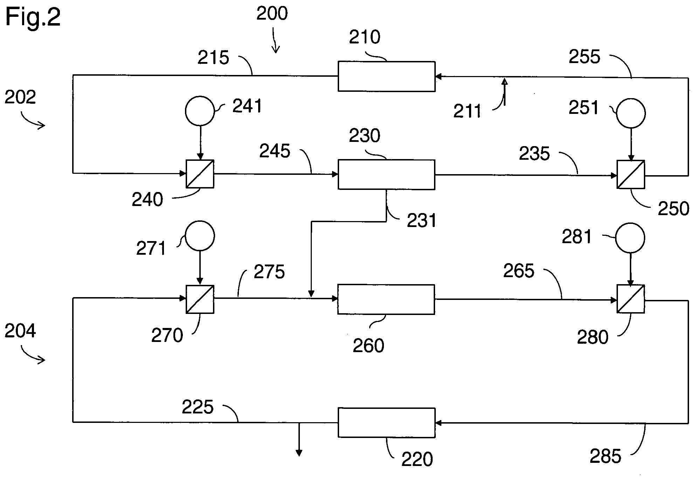

Fig. 2 zeigt ein schematisches Blockdiagramm einer Steuervorrichtung 200 zum Steuern eines Drehratensensors. Bei dem Drehratensensor kann es sich um einen mit Bezug auf Fig. 1 beschriebenen Sensor handeln. Der Drehratensensor kann zum Beispiel ein mikro-elektro-mechanischer Sensor (MEMS) sein.

Die Steuervorrichtung 200 weist einen ersten Regelkreis 202 und einen zweiten Regelkreis 204 auf. Der erste Regelkreis 202 weist eine erste Reglereinheit 210 zum Steuern einer Anregeeinheit 230 auf. Die erste Reglereinheit 210 kann z.B. über die Anregeeinheit 230 eine Schwingung eines MEMS oder des Drehratensensors gemäß Fig. 1 entlang einer ersten Richtung, z.B. entlang der x-Richtung aus Fig. 1, steuern. Dazu kann die Anregeeinheit 230 eine oder mehrere Anregeelektroden 130 und Elektroden 132 aufweisen, wie sie in Fig. 1 dargestellt sind.

Dazu gibt die erste Reglereinheit 210 ein erstes digitales Steuersignal 215 aus, das von einem ersten Digital-Analog-Wandler 240 in ein erstes analoges Signal 245 umgewandelt wird. Das erste analoge Signal 245 wird an die Anregeeinheit 230 übermittelt und dient zur Einstellung einer Frequenz und/oder Amplitude einer Schwingung, die mit der Anregeeinheit 230 angeregt wird. Die Anregeeinheit 230 gibt, wenn die entsprechenden Anregeelektroden 130 im Zeitmultiplex auch als Ausleseelektroden betrieben werden, ein erstes analoges Messsignal 235 aus, das die Schwingung des Drehratensensors entlang der ersten Richtung beschreibt. Dieses Signal könnte aber auch über separate, in der Anregeeinheit 230 enthaltene Elektrodenpaare gewonnen werden. Das erste analoge Messsignal 235 wird in einem ersten Analog-Digital-Wandler 250 in ein erstes digitales Auslesesignal 255 umgewandelt, das mit einem Reglersignal 211 verglichen wird und der ersten Reglereinheit 210 zugeführt wird.

Der zweite Regelkreis 204 weist eine zweite Reglereinheit 220 zum Steuern einer Ausleseeinheit 260 und damit zum Steuern einer Schwingung des Drehratensensors entlang einer von der ersten Richtung verschiedenen zweiten Richtung auf. Zum Beispiel kann die Ausleseeinheit 260 eine Ausleseelektrode 160 gemäß Fig. 1 aufweisen, die eine Schwingung einer Auslesemasse entlang der zweiten Richtung detektiert, bei der es sich zum Beispiel um die in Fig. 1 gezeigte y-Richtung handeln kann. Die von der Ausleseeinheit 260 detektierte Schwingung wird durch eine Drehung des Drehratensensors ausgelöst, wenn die Amplitude der vom ersten Regelkreis 202 gesteuerten Schwingung ungleich Null ist. Dies ist in Fig. 2 schematisch durch das Coriolissignal 231 dargestellt.

In erster Iteration wird das Coriolissignal 231 von der Ausleseeinheit 260 gemessen und als zweites analoges Messsignal 265 an einen zweiten Analog-Digital-Wandler 280 weitergegeben, wo es in ein zweites digitales Auslesesignal 285 umgewandelt wird. Das zweite digitale Auslesesignal 285 wird der zweiten Reglereinheit 220 zugeführt, die ein zweites digitales Steuersignal 225 ausgibt, um die Schwingung des Drehratensensors entlang der zweiten Richtung über Elektroden, die in der Ausleseeinheit 260 enthalten sein können, auf Null zu regeln. Das zweite digitale Steuersignal 225 wird auch nach außen ausgegeben, und gibt die Stärke der Drehung des Drehratensensors wieder.

Um die Ausleseeinheit 260 effektiv steuern zu können, wird das zweite digitale Steuersignal 225 in einem zweiten Digital-Analog-Wandler 270 in ein zweites analoges Signal 275 umgewandelt, das der Ausleseeinheit 260 zugeführt wird. Durch die Überlagerung des Coriolissignals 231 und des zweiten analogen Signals 275 kann die Amplitude einer Schwingung des Drehratensensors entlang der zweiten Richtung auf Null geregelt werden.

Der erste Digital-Analog-Wandler 240 wird mit einer Referenzspannung U_{RefD1} 241 betrieben. Der erste Analog-Digital-Wandler 250 wird mit einer Referenzspannung U_{RefA1} 251 betrieben und der zweite Digital-Analog-Wandler 270 wird mit einer Referenzspannung U_{RefD2} 271 betrieben. Die Referenzspannungen U_{RefD1} 241, U_{RefA1} 251, und U_{RefD2} 271 gehen in den Skalenfaktor ein, der das ausgelesene zweite digitale Steuersignal 225 mit der an dem Drehratensensor anliegenden Drehrate verbindet. Zudem kann der zweite Analog-Digital-Wandler 280 mit einer Referenzspannung U_{RefA2} 281 betrieben werden.

In den Analog-Digital-/Digital-Analog-Wandlern werden die Referenzspannungen genutzt, um ein eingehendes Signal durch Vergleich mit den Referenzspannungen abzutasten und dadurch dessen Größe zu bestimmen.

Gemäß einer Ausführungsform sind zumindest zwei der Referenzspannungen U_{RefD1} 241, U_{RefA1} 251 und U_{RefD2} 271 voneinander abhängig. Dadurch wird gewährleistet, dass Alterungseffekte der Referenzspannungen U_{RefD1} 241, U_{RefA1} 251 und U_{RefD2} 271 sich im Skalenfaktor des Drehratensensors kompensieren und somit Skalenfaktorfehler, die durch Alterungseffekte bedingt sind, minimiert werden. Dadurch wird durch Einsatz der Steuervorrichtung 200 die Genauigkeit und Verlässlichkeit des mit der Steuervorrichtung 200 betriebenen Drehratensensors erhöht.

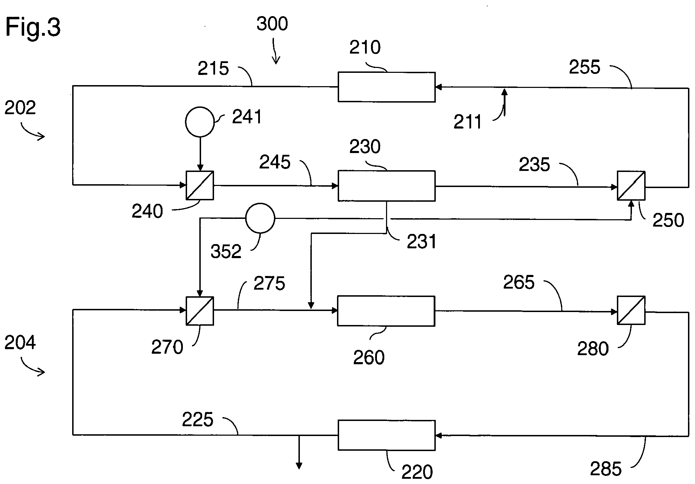

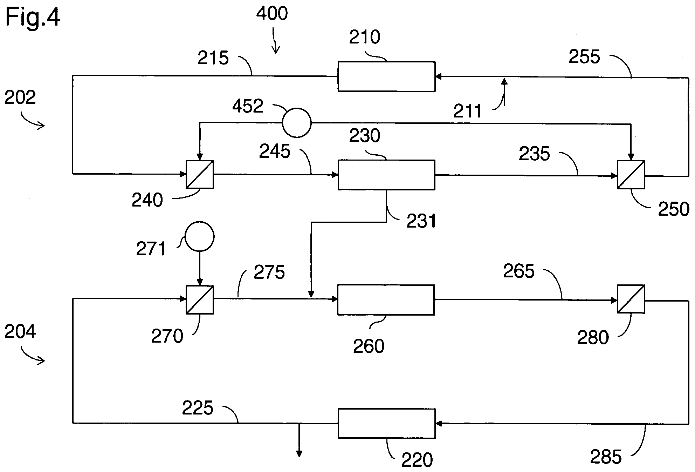

Fig. 3 zeigt ein schematisches Blockdiagramm einer Steuervorrichtung 300 zum Steuern eines Drehratensensors. Der Aufbau der Steuervorrichtung 300 entspricht im Wesentlichen dem Aufbau der in Fig. 2 gezeigten Steuervorrichtung 200. Deshalb wird bezüglich des genauen Aufbaus der Steuervorrichtung 300 auf die Beschreibung der in Fig. 2 gezeigten Steuervorrichtung 200 verwiesen. Zudem sei darauf hingewiesen, dass in der Fig. 3 und auch in den weiter unten beschriebenen Fig. 4, 5 und 6 die Referenzspannung U_{RefA2} 281 des zweiten Analog-Digital-Wandlers 280 nicht dargestellt ist, da dies zur weiteren Diskussion der Ausführungsformen der erfindungsgemäßen Steuervorrichtungen nicht nötig ist.

Die Steuervorrichtung 300 unterscheidet sich von der Steuervorrichtung 200 dadurch, dass die Referenzspannungen U_{RefA1} und U_{RefD2} des ersten Analog-Digital-Wandlers 250 und des zweiten Digital-Analog-Wandlers 270 zueinander direkt proportional sind. Dies wird in Fig. 3 durch die gemeinsame Spannungsquelle 352 dargestellt, von der sich die Referenzspannungen des ersten Analog-Digital-Wandlers 250 und des zweiten Digital-Analog-Wandlers 270 herleiten.

Dadurch wird gewährleistet, dass sich bei einer Änderung der Referenzspannung U_{RefA1} des ersten Analog-Digital-Wandlers 250 die Referenzspannung U_{RefD2} des zweiten Digital-Analog-Wandlers 270 gleichläufig mit der Referenzspannung U_{RefA1} ändert. Dies kann zum Beispiel durch die in Fig. 3 gezeigte gemeinsame Spannungsquelle 352 erreicht werden, von der sich die Referenzspannungen U_{RefA1} und U_{RefD2} herleiten. Die Referenzspannungen U_{RefA1} und U_{RefD2} können dabei direkt der Spannung der gemeinsamen Spannungsquelle 352 entsprechen, sie können aber auch durch Skalierung aus der Spannung der gemeinsamen Spannungsquelle 352 erzeugt werden. Dann ist das Verhältnis der Referenzspannungen U_{RefA1} und U_{RefD2} ein zeitlich konstanter Wert.

Alternativ kann auch durch Messungen der Referenzspannungen über eine vorbestimmte Zeitspanne, z.B. beim Hersteller, festgestellt werden, ob eine Referenzspannung eines Digital-Analog-Wandler- oder eines Analog-Digital-Wandler-Bauteils, das ohne Modifikation in der Steuervorrichtung 300 verwendet werden soll, sich im Laufe der Zeit vergrößert oder verkleinert. Dann können als erster Analog-Digital-Wandler 250 und als zweiter Digital-Analog-Wandler 270 solche Bauteile verwendet werden, deren Referenzspannungen sich gleichläufig ändern. Dies hat den Vorteil, dass eine bestehende Schaltung nicht verändert werden muss, sondern nur Bauteile ausgewählt werden müssen, deren Alterungscharakteristik gleichläufig ist.

Durch die in Fig. 3 gezeigte Steuervorrichtung 300 lässt sich die Abhängigkeit des Skalenfaktors von der Alterung der Referenzspannungen auf die zweite Potenz reduzieren.

Fig. 4 zeigt eine Steuervorrichtung 400 zum Steuern eines Drehratensensors gemäß einer weiteren Ausführungsform. Die Steuervorrichtung 400 weist im Wesentlichen den gleichen Aufbau wie die Steuervorrichtung 200 aus Fig. 2 auf. Deshalb wird auf eine detaillierte Beschreibung des Aufbaus der Steuervorrichtung 400 verzichtet und auf die Beschreibung der Steuervorrichtung 200 verwiesen.

Die Steuervorrichtung 400 unterscheidet sich von der Steuervorrichtung 200 darin, dass die Referenzspannung U_{RefA1} des ersten Analog-Digital-Wandlers 250 zur Referenzspannung U_{RefD1} des ersten Digital-Analog-Wandlers 240 direkt proportional ist. Dies ist in Fig. 4 durch eine gemeinsame Spannungsquelle 452 dargestellt, von der sich die Referenzspannungen U_{RefA1} und U_{RefD1} des ersten Analog-Digital-Wandlers 250 und des ersten Digital-Analog-Wandlers 240 herleiten.

Dadurch wird gewährleistet, dass sich bei einer Änderung der Referenzspannung U_{RefA1} des ersten Analog-Digital-Wandlers 250 die Referenzspannung U_{RefD1} des ersten Digital-Analog-Wandlers 240 gleichläufig mit der Referenzspannung U_{RefA1} ändert. Dies kann zum Beispiel durch die in Fig. 4 gezeigte gemeinsame Spannungsquelle 452 erreicht werden, von der sich die Referenzspannungen U_{ReFA1} und U_{ReFD1} herleiten. Die Referenzspannungen U_{RefA1} und U_{RefD1} können dabei direkt der Spannung der gemeinsamen Spannungsquelle 452 entsprechen, sie können aber auch durch Skalierung aus der Spannung der gemeinsamen Spannungsquelle 452 erzeugt werden. Dann ist das Verhältnis der Referenzspannungen U_{RefA1} und U_{RefD1} ein zeitlich konstanter Wert.

Alternativ kann auch durch Messungen der Referenzspannungen über eine vorbestimmte Zeitspanne, z.B. beim Hersteller, festgestellt werden, ob eine Referenzspannung eines Digital-Analog-Wandler- oder eines Analog-Digital-Wandler-Bauteils, das ohne Modifikation in der Steuervorrichtung 400 verwendet werden soll, sich im Laufe der Zeit vergrößert oder verkleinert. Dann können als erster Analog-Digital-Wandler 250 und als erster Digital-Analog-Wandler 240 solche Bauteile verwendet werden, deren Referenzspannungen sich gleichläufig ändern. Dies hat den Vorteil, dass eine bestehende Schaltung nicht verändert werden muss, sondern nur Bauteile ausgewählt werden müssen, deren Alterungscharakteristik gleichläufig ist.

Durch die in Fig. 4 gezeigte Steuervorrichtung 400 lässt sich die Abhängigkeit des Skalenfaktors von der Alterung der Referenzspannungen auf die zweite Potenz reduzieren.

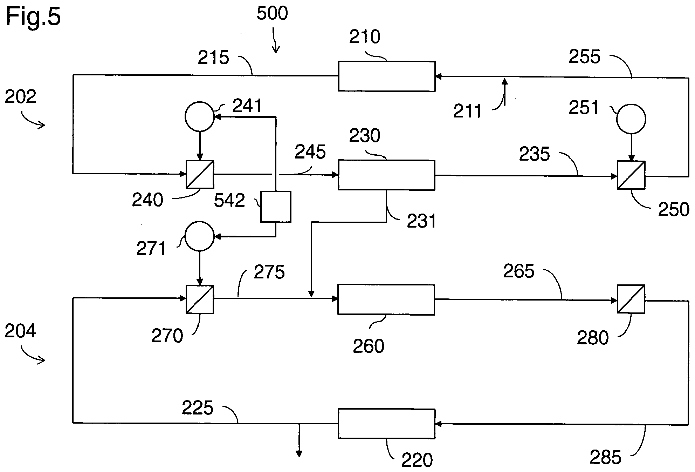

Fig. 5 zeigt ein schematisches Blockdiagramm einer Steuervorrichtung 500 zum Steuern eines Drehratensensors gemäß einer weiteren Ausführungsform. Der Aufbau der Steuervorrichtung 500 entspricht im Wesentlichen dem Aufbau der in Fig. 2 gezeigten Steuervorrichtung 200. Deshalb wird hier auf eine detaillierte Beschreibung der Steuervorrichtung 500 verzichtet und auf die Beschreibung der Steuervorrichtung 200 verwiesen.

Die Steuervorrichtung 500 unterscheidet sich von der Steuervorrichtung 200 dadurch, dass die Referenzspannung U_{RefD1} des ersten Digital-Analog-Wandlers 240 invers proportional (d.h. reziprok) zur Referenzspannung U_{RefD2} des zweiten Digital-Analog-Wandlers 270 ist. Dies ist in Fig. 5 durch das Reziprozitätsglied 542 dargestellt.

Dadurch wird gewährleistet, dass sich bei einer Änderung der Referenzspannung U_{RefD1} des ersten Digital-Analog-Wandlers 240 die Referenzspannung U_{RefD2} des zweiten Digital-Analog-Wandlers 270 gegenläufig zu der Referenzspannung U_{RefD1} ändert. Dies kann zum Beispiel durch das in Fig. 5 gezeigte Reziprozitätsglied 542 erreicht werden, das entweder einen zur Referenzspannung U_{RefD1} des ersten Digital-Analog-Wandlers 240 reziproken Wert ausgibt (d.h. die Referenzspannung U_{RefD1} invertiert) und als Referenzspannung U_{RefD2} an den zweiten Digital-Analog-Wandlers 270 weitergibt, oder das einen zur Referenzspannung U_{RefD2} des zweiten Digital-Analog-Wandlers 270 reziproken Wert ausgibt und als Referenzspannung U_{RefD1} an den ersten Digital-Analog-Wandlers 240 weitergibt. Zudem können die Referenzspannungen U_{RefD1} und U_{RefD2} vor und/oder nach dem Invertieren skaliert werden. Das Produkt der Referenzspannungen U_{RefD1} und U_{RefD2} ist dann ein zeitlich konstanter Wert.

Alternativ kann aber auch durch Messungen der Referenzspannungen über eine vorbestimmte Zeitspanne, z.B. beim Hersteller, festgestellt werden, ob eine Referenzspannung eines der Digital-Analog-Wandler-Bauteile, das ohne Modifikation in der Steuervorrichtung 500 verwendet werden soll, sich im Laufe der Zeit vergrößert oder verkleinert. Dann können als erster Digital-Analog-Wandler 240 und als zweiter Digital-Analog-Wandler 270 solche Bauteile verwendet werden, deren Referenzspannungen sich gegenläufig ändern. Dies hat den Vorteil, dass eine bestehende Schaltung nicht verändert werden muss, sondern nur Bauteile ausgewählt werden müssen, deren Alterungscharakteristik gegenläufig ist.

Durch die in Fig. 5 gezeigte Steuervorrichtung 500 lässt sich die Abhängigkeit des Skalenfaktors von der Alterung der Referenzspannungen auf die zweite Potenz reduzieren.

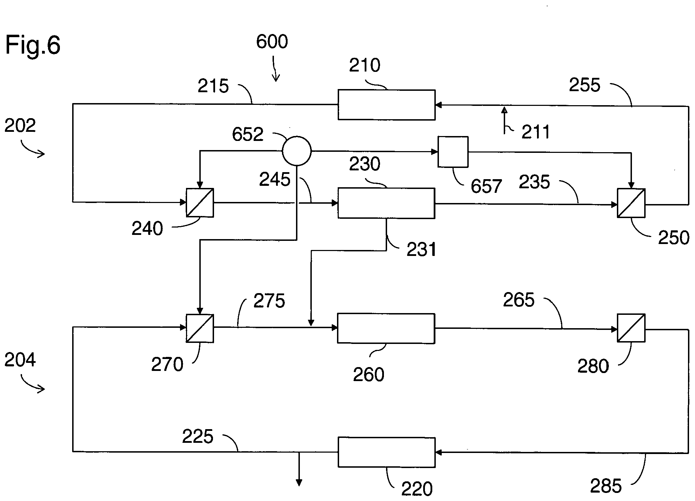

Fig. 6 stellt ein schematisches Blockdiagramm einer Steuervorrichtung 600 zum Steuern eines Drehratensensors gemäß einer weiteren Ausführungsform dar. Der Aufbau der Steuervorrichtung 600 entspricht im Wesentlichen dem Aufbau der Steuervorrichtung 200. Auf eine detaillierte Beschreibung der Steuervorrichtung 600 wird deshalb hier verzichtet und auf die Beschreibung der Steuervorrichtung 200 verwiesen.

Die Steuervorrichtung 600 unterscheidet sich von der Steuervorrichtung 200 darin, dass die Referenzspannung U_{RefD1} des ersten Digital-Analog-Wandlers 240 direkt proportional zur Referenzspannung U_{RefD2} des zweiten Digital-Analog-Wandlers ist und die Referenzspannung U_{RefA1} des ersten Analog-Digital-Wandlers 250 direkt proportional zur dritten Potenz der Referenzspannung U_{RefD1} des ersten Digital-Analog-Wandlers 240 ist. Dies ist in Fig. 6 durch eine gemeinsame Spannungsquelle 652 und ein Potenzierglied 657 dargestellt.

Dadurch wird zum einen gewährleistet, dass sich bei einer Änderung der Referenzspannung U_{RefD1} des ersten Digital-Analog-Wandlers 240 die Referenzspannung U_{RefD2} des zweiten Digital-Analog-Wandlers 270 gleichläufig mit der Referenzspannung U_{RefD1} ändert. Dies kann zum Beispiel durch die in Fig. 6 gezeigte gemeinsame Spannungsquelle 652 erreicht werden, von der sich die Referenzspannungen U_{RefD1} und U_{RefD2} herleiten. Die Referenzspannungen U_{RefD1} und U_{RefD2} können dabei direkt der Spannung der gemeinsamen Spannungsquelle 652 entsprechen, sie können aber auch durch Skalierung aus der Spannung der gemeinsamen Spannungsquelle 652 erzeugt werden. Dann ist das Verhältnis der Referenzspannungen U_{RefD1} und U_{RefD2} ein zeitlich konstanter Wert.

Alternativ kann aber auch durch Messungen der Referenzspannungen über eine vorbestimmte Zeitspanne, z.B. beim Hersteller, festgestellt werden, ob eine Referenzspannung eines der Digital-Analog-Wandler-Bauteile, das ohne Modifikation in der Steuervorrichtung 600 verwendet werden soll, sich im Laufe der Zeit vergrößert oder verkleinert. Dann können als erster Digital-Analog-Wandler 240 und als zweiter Digital-Analog-Wandler 270 solche Bauteile verwendet werden, deren Referenzspannungen sich gleichläufig ändern. Dies hat den Vorteil, dass eine bestehende Schaltung nicht verändert werden muss, sondern nur Bauteile ausgewählt werden müssen, deren Alterungscharakteristik gleichläufig ist.

Gleichzeitig wird gewährleistet, dass sich bei Änderung der Referenzspannung U_{RefA1} des ersten Analog-Digital-Wandlers 250 um den Betrag Δ bei kleinem Δ die Referenzspannung U_{RefD1} des ersten Digital-Analog-Wandlers 240 um einen zu3Δ proportionalen Betrag ändert. Dies kann durch Verbinden des Eingangs des Potenzierglieds 657 mit der gemeinsamen Spannungsquelle 652 erreicht werden, wenn das Verhältnis von U_{RefD1} zu U_{RefD2} zeitlich konstant ist. Alternativ wird der Eingang des Potenzierglied 657 mit einer der Referenzspannungen U_{RefD1}, U_{RefD2} verbunden, die sich, wie auf Grund von Messungen bestimmt wurde, gleichläufig ändern.

Durch die in Fig. 6 gezeigte Steuervorrichtung 600 lässt sich die Abhängigkeit des Skalenfaktors von der Alterung der Referenzspannungen auf die zweite Potenz reduzieren oder gänzlich eliminieren.

Gemäß weiterer, nicht dargestellter Ausführungsformen können die in den Fig. 2 bis 6 dargestellten Steuervorrichtungen miteinander kombiniert werden, um die Abhängigkeit des Skalenfaktors von der Alterung der Referenzspannungen noch weiter zu unterdrücken, sofern sich die gezeigten Ausführungsformen nicht gegenseitig ausschließen.

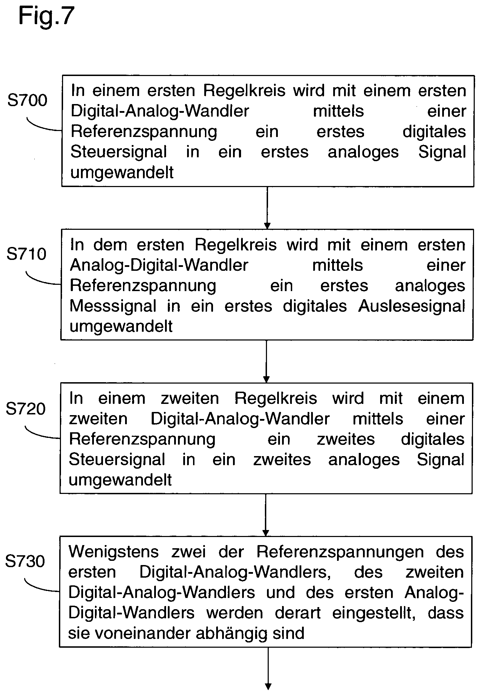

Fig. 7 stellt ein schematisches Flussdiagramm eines Verfahrens zum Steuern eines Drehratensensors gemäß einer Ausführungsform dar.

In S700 wird in einem ersten Regelkreis mit einem ersten Digital-Analog-Wandler mittels einer Referenzspannung ein erstes digitales Steuersignal in ein erstes analoges Signal umgewandelt.

In S710 wird in dem ersten Regelkreis mit einem ersten Analog-Digital-Wandler mittels einer Referenzspannung ein erstes analoges Messsignal in ein erstes digitales Auslesesignal umgewandelt.

In S720 wird in einem zweiten Regelkreis mit einem zweiten Digital-Analog-Wandler mittels einer Referenzspannung ein zweites digitales Steuersignal in ein zweites analoges Signal umgewandelt.

In S730 werden wenigstens zwei der Referenzspannungen des ersten Digital-Analog-Wandlers, des zweiten Digital-Analog-Wandlers und des ersten Analog-Digital-Wandlers derart eingestellt, dass sie voneinander abhängig sind.

Dadurch wird gewährleistet, dass sich Alterungseffekte der Referenzspannungen, die in den Skalenfaktor des Drehratensensors eingehen, derart kompensieren, dass Skalenfaktorfehler minimiert werden. Dadurch wird der Drehratensensor genauer und verlässlicher.

Gemäß weiterer Ausführungsformen können die Referenzspannungen des ersten Digital-Analog-Wandlers, des zweiten Digital-Analog-Wandlers und des ersten Analog-Digital-Wandlers gemäß einer der mit Bezug auf die Fig. 3 bis 6 diskutierten Ausführungsform einer Steuervorrichtung eingestellt werden. Dadurch kann die Abhängigkeit des Skalenfaktors von Alterungseffekten der Referenzspannungen auf eine quadratische Abhängigkeit gesenkt oder ganz eliminiert werden.

## Patentansprüche

1. Steuervorrichtung (200) zum Steuern eines Drehratensensors mit
- einem ersten Regelkreis (202) mit
einer ersten Reglereinheit (210) zum Steuern einer Schwingung des Drehratensensors entlang einer ersten Richtung,
einem ersten Digital-Analog-Wandler (240) zum Umwandeln eines von der ersten Reglereinheit (210) ausgegebenen ersten digitalen Steuersignals (215) in ein erstes analoges Signal (245), mit dem die Schwingung des Drehratensensors entlang der ersten Richtung gesteuert wird und
einem ersten Analog-Digital-Wandler (250) zum Umwandeln eines ersten analogen Messsignals (235), das die Schwingung des Drehratensensors entlang der ersten Richtung beschreibt, in ein erstes digitales Auslesesignal (255), das der ersten Reglereinheit (210) zugeführt wird; und mit
- einem zweiten Regelkreis (204) mit
einer zweiten Reglereinheit (220) zum Steuern einer Schwingung des Drehratensensors entlang einer von der ersten Richtung verschiedenen zweiten Richtung und
einem zweiten Digital-Analog-Wandler (270) zum Umwandeln eines von der zweiten Reglereinheit ausgegebenen zweiten digitalen Steuersignals (225) in ein zweites analoges Signal (275), mit dem die Schwingung des Drehratensensors entlang der zweiten Richtung gesteuert wird; wobei
der erste Digital-Analog-Wandler (240), der zweite Digital-Analog-Wandler (270) und der erste Analog-Digital-Wandler (250) beim Umwandeln mit je einer Referenzspannung (241, 251, 271) arbeiten;
**dadurch gekennzeichnet, dass**
wenigstens zwei der Referenzspannungen (241, 251, 271) des ersten Digital-Analog-Wandlers (240), des zweiten Digital-Analog-Wandlers (270) und des ersten Analog-Digital-Wandlers (250) voneinander abhängig sind.

2. Steuervorrichtung (300) nach Anspruch 1, wobei die Referenzspannung (251) des ersten Analog-Digital-Wandlers (250) zur Referenzspannung (271) des zweiten Digital-Analog-Wandlers (270) direkt proportional ist.

3. Steuervorrichtung (400) nach einem der vorherigen Ansprüche, wobei die Referenzspannung (251) des ersten Analog-Digital-Wandlers (250) zur Referenzspannung (241) des ersten Digital-Analog-Wandlers (240) direkt proportional ist.

4. Steuervorrichtung (600) nach einem der Ansprüche 1 oder 2, wobei die Referenzspannung (241) des ersten Digital-Analog-Wandlers (240) direkt proportional zur Referenzspannung (271) des zweiten Digital-Analog-Wandlers (270) ist und die Referenzspannung (251) des ersten Analog-Digital-Wandlers (250) direkt proportional zur dritten Potenz der Referenzspannung (241) des ersten Digital-Analog-Wandlers (240) ist.

5. Steuervorrichtung (500) nach Anspruch 1 oder 2, wobei die Referenzspannung (241) des ersten Digital-Analog-Wandlers (240) invers proportional zur Referenzspannung (271) des zweiten Digital-Analog-Wandlers (270) ist.

6. Steuervorrichtung (500) nach einem der Ansprüche 1, 2 oder 5, wobei sich, wenn sich die Referenzspannungen (241, 271) des ersten Digital-Analog-Wandlers (240) und des zweiten Digital-Analog-Wandlers (270) bei Alterung ändern, die Referenzspannung (241) des ersten Digital-Analog-Wandlers (240) gegenläufig zur Referenzspannung (271) des zweiten Digital-Analog-Wandlers (270) ändert.

7. Steuervorrichtung (200) nach einem der vorherigen Ansprüche, wobei der zweite Regelkreis (204) einen zweiten Analog-Digital-Wandler (280) zum Umwandeln eines zweiten analogen Messsignals (265), das die Schwingung des Drehratensensors entlang der zweiten Richtung beschreibt, in ein zweites digitales Auslesesignal (285), das der zweiten Reglereinheit (220) zugeführt wird, aufweist.

8. Steuervorrichtung (200) nach einem der vorherigen Ansprüche, wobei eine Drehung des Drehratensensors um eine zur ersten Richtung und zur zweiten Richtung senkrecht stehende Normale die Schwingung des Drehratensensors entlang der zweiten Richtung auslöst.

9. Steuervorrichtung (200) nach einem der vorherigen Ansprüche, wobei der Drehratensensor ein mikroelektromechanischer (MEMS) Kreisel ist.

10. Verfahren zum Steuern eines Drehratensensors mit den Schritten:
- in einem ersten Regelkreis (202)
mit einem ersten Digital-Analog-Wandler (240) Umwandeln eines von einer ersten Reglereinheit (210) zum Steuern einer Schwingung des Drehratensensors entlang einer ersten Richtung ausgegebenen ersten digitalen Steuersignals (215) in ein erstes analoges Signal (245), mit dem die Schwingung des Drehratensensors entlang der ersten Richtung gesteuert wird, und
mit einem ersten Analog-Digital-Wandler (250) Umwandeln eines ersten analogen Messsignals (235), das die Schwingung des Drehratensensors entlang der ersten Richtung beschreibt, in ein erstes digitales Auslesesignal (255), das der ersten Reglereinheit (210) zugeführt wird;
- in einem zweiten Regelkreis (204)
mit einem zweiten Digital-Analog-Wandler (270) Umwandeln eines von einer zweiten Reglereinheit (220) zum Steuern einer Schwingung des Drehratensensors entlang einer von der ersten Richtung verschiedenen zweiten Richtung ausgegebenen zweiten digitalen Steuersignals (225) in ein zweites analoges Signal (275), mit dem die Schwingung des Drehratensensors entlang der zweiten Richtung gesteuert wird, wobei
der erste Digital-Analog-Wandler (240), der zweite Digital-Analog-Wandler (270) und der erste Analog-Digital-Wandler (250) beim Umwandeln mit je einer Referenzspannung (241, 251, 271) arbeiten;
**gekennzeichnet durch**
Einstellen von wenigstens zwei der Referenzspannungen (241, 251, 271) des ersten Digital-Analog-Wandlers (241), des zweiten Digital-Analog-Wandlers (270) und des ersten Analog-Digital-Wandlers (250) derart, dass sie voneinander abhängig sind.

## Claims

1. A control device (200) for controlling a rotation rate sensor, comprising
- a first control loop (202), comprising
a first control unit (210) for controlling an oscillation of the rotation rate sensor along a first direction,
a first digital-to-analog converter (240) for converting a first digital control signal (215) output from the first control unit (210) into a first analog signal (245) by means of which the oscillation of the rotation rate sensor along the first direction is controlled, and
a first analog-to-digital converter (250) for converting a first analog measurement signal (235) that describes the oscillation of the rotation rate sensor along the first direction into a first digital read-out signal (255) that is supplied to the first control unit (210); and comprising
- a second control loop (204), comprising
a second control unit (220) for controlling an oscillation of the rotation rate sensor along a second direction different from the first direction, and
a second digital-to-analog converter (270) for converting a second digital control signal (225) output from the second control unit into a second analog signal (275) by means of which the oscillation of the rotation rate sensor along the second direction is controlled; wherein
the first digital-to-analog converter (240), the second digital-to-analog converter (270), and the first analog-to-digital converter (250) operate during conversion each with a reference voltage (241, 251, 271);
**characterized in that**
at least two of the reference voltages (241, 251, 271) of the first digital-to-analog converter (240), the second digital-to-analog converter (270), and the first analog-to-digital converter (250) are dependent from each other.

2. The control device (300) according to claim 1, wherein the reference voltage (251) of the first analog-to-digital converter (250) is directly proportional to the reference voltage (271) of the second digital-to-analog converter (270).

3. The control device (400) according to one of the preceding claims, wherein the reference voltage (251) of the first analog-to-digital converter (250) is directly proportional to the reference voltage (241) of the first digital-to-analog converter (240).

4. The control device (600) according to one of claims 1 or 2, wherein the reference voltage (241) of the first digital-to-analog converter (240) is directly proportional to the reference voltage (271) of the second digital-to-analog converter (270) and the reference voltage (251) of the first analog-to-digital converter (250) is directly proportional to the third power of the reference voltage (241) of the first digital-to-analog converter (240).

5. The control device (500) according to claim 1 or 2, wherein the reference voltage (241) of the first digital-to-analog converter (240) is inversely proportional to the reference voltage (271) of the second digital-to-analog converter (270).

6. The control device (500) according to one of claims 1, 2, or 5, wherein the reference voltage (241) of the first digital-to-analog converter (240) changes oppositely to the reference voltage (271) of the second digital-to-analog converter (270), if the reference voltages (241, 271) of the first digital-to-analog converter (240) and the second digital-to-analog converter (270) change due to aging.

7. Control device (200) according to one of the preceding claims, wherein the second control loop (204) comprises a second analog-to-digital converter (280) for converting a second analog measurement signal (265) that describes the oscillation of the rotation rate sensor along the second direction into a second digital read-out signal (285) that is supplied to the second control unit (220).

8. The control device (200) according to one of the preceding claims, wherein a rotation of the rotation rate sensor around a normal perpendicular to the first direction and the second direction causes the oscillation of the rotation rate sensor along the second direction.

9. The control device (200) according to one of the preceding claims, wherein the rotation rate sensor is a micro-electro-mechanical (MEMS) gyroscope.

10. Method for controlling a rotation rate sensor comprising the steps:
- in a first control loop (202)
converting with a first digital-to-analog converter (240) a first digital control signal (215) output by a first control unit (210) for controlling an oscillation of the rotation rate sensor along a first direction into a first analog signal (245) by means of which the oscillation of the rotation rate sensor along the first direction is controlled, and
converting with a first analog-to-digital converter (250) a first analog measurement signal (235) that describes the oscillation of the rotation rate sensor along the first direction into a first digital read-out signal (255) that is supplied to the first control unit (210);
- in a second control loop (204)
converting with a second digital-to-analog converter (270) a second digital control signal (225) output by a second control unit (220) for controlling an oscillation of the rotation rate sensor along a second direction being different from the first direction into a second analog signal (275) by means of which the oscillation of the rotation rate sensor along the second direction is controlled, wherein
the first digital-to-analog converter (240), the second digital-to-analog converter (270) and the first analog-to-digital converter (250) operate during conversion each with a reference voltage (241, 251, 271);
**characterized by**
adjusting of a least two of the reference voltages (241, 251, 271) of the first digital-to-analog converter (240), the second digital-to-analog converter (270), and the first analog-to-digital converter (250) such that they dependend on each other.

## Revendications

1. Dispositif de commande (200) pour commander un capteur de vitesse de rotation avec
- un premier circuit de régulation (202) avec
une première unité de régulateur (210) pour commander une oscillation du capteur de vitesse de rotation dans une première direction,
un premier convertisseur numérique-analogique (240) pour convertir un premier signal de commande numérique (215) émis par la première unité de régulateur (210) en un premier signal analogique (245) avec lequel l'oscillation du capteur de vitesse de rotation est commandée dans la première direction et
un premier convertisseur analogique-numérique (250) pour convertir un premier signal de mesure analogique (235) qui décrit l'oscillation du capteur de vitesse de rotation dans la première direction en un premier signal numérique de lecture (255) qui est amené jusqu'à la première unité de régulateur (210) ; et avec
- un deuxième circuit de régulation (204) avec
une deuxième unité de régulateur (220) pour commander une oscillation du capteur de vitesse de rotation dans une deuxième direction, différente de la première direction et
un deuxième convertisseur numérique-analogique (270) pour convertir un deuxième signal de commande numérique (225) émis par la deuxième unité de régulateur en un deuxième signal analogique (275) avec lequel l'oscillation du capteur de vitesse de rotation est commandée dans la deuxième direction ; dans lequel
le premier convertisseur numérique-analogique (240), le deuxième convertisseur numérique-analogique (270) et le premier convertisseur analogique-numérique (250) fonctionnent chacun, lors de la conversion, avec une tension de référence (241, 251, 271) ;
**caractérisé en ce qu'**au moins deux des tensions de référence (241, 251, 271) du premier convertisseur numérique-analogique (240), du deuxième convertisseur numérique-analogique (270) et du premier convertisseur analogique-numérique (250) sont dépendantes l'une de l'autre.

2. Dispositif de commande (300) selon la revendication 1, dans lequel la tension de référence (251) du premier convertisseur analogique-numérique (250) est directement proportionnelle à la tension de référence (271) du deuxième convertisseur numérique-analogique (270).

3. Dispositif de commande (400) selon l'une des revendications précédentes, dans lequel la tension de référence (251) du premier convertisseur analogique-numérique (250) est directement proportionnelle à la tension de référence (241) du premier convertisseur numérique-analogique (240).

4. Dispositif de commande (600) selon l'une des revendications 1 ou 2, dans lequel la tension de référence (241) du premier convertisseur numérique-analogique (240) est directement proportionnelle à la tension de référence (271) du deuxième convertisseur numérique-analogique (270), et la tension de référence (251) du premier convertisseur analogique-numérique (250) est directement proportionnelle au cube de la tension de référence (241) du premier convertisseur numérique-analogique (240).

5. Dispositif de commande (500) selon la revendication 1 ou 2, dans lequel la tension de référence (241) du premier convertisseur numérique-analogique (240) est inversement proportionnelle à la tension de référence (271) du deuxième convertisseur numérique-analogique (270).

6. Dispositif de commande (500) selon l'une des revendications 1, 2 ou 5, dans lequel si les tensions de référence (241, 271) du premier convertisseur numérique-analogique (240) et du deuxième convertisseur numérique-analogique (270) changent en cas d'altération, la tension de référence (241) du premier convertisseur numérique-analogique (240) change à l'opposé de la tension de référence (271) du deuxième convertisseur numérique-analogique (270).

7. Dispositif de commande (200) selon l'une des revendications précédentes, dans lequel le deuxième circuit de régulation (204) comporte un deuxième convertisseur analogique-numérique (280) pour convertir un deuxième signal de mesure analogique (265) qui décrit l'oscillation du capteur de vitesse de rotation dans la deuxième direction, en un deuxième signal de lecture (285) qui est amené jusqu'à la deuxième unité de régulateur (220).

8. Dispositif de commande (200) selon l'une des revendications précédentes, dans lequel une rotation du capteur de vitesse de rotation autour d'une normale perpendiculaire à la première direction et à la deuxième direction déclenche l'oscillation du capteur de vitesse de rotation dans la deuxième direction.

9. Dispositif de commande (200) selon l'une des revendications précédentes, dans lequel le capteur de vitesse de rotation est un gyroscope micro-électromécanique (MEMS).

10. Procédé pour commander un capteur de vitesse de rotation avec les étapes :
- dans un premier circuit de régulation (202),
de conversion, avec un premier convertisseur numérique-analogique (240), d'un premier signal de commande numérique (215) émis par une première unité de régulateur (210) pour commander une oscillation du capteur de vitesse de rotation dans une première direction, en un premier signal analogique (245) avec lequel l'oscillation du capteur de vitesse de rotation est commandée dans la première direction, et
de conversion, avec un premier convertisseur analogique-numérique (250), d'un premier signal de commande analogique (235) qui décrit l'oscillation du capteur de vitesse de rotation dans la première direction, en un premier signal numérique de lecture (255) qui est amené jusqu'à la première unité de régulateur (210) ;
- dans un deuxième circuit de régulation (204),
de conversion, avec un deuxième convertisseur numérique-analogique (270), d'un deuxième signal de commande numérique (225) émis par une deuxième unité de régulateur (220) pour commander une oscillation du capteur de vitesse de rotation dans une deuxième direction, différente de la première direction, en un deuxième signal analogique (275) avec lequel l'oscillation du capteur de vitesse de rotation est commandée dans la deuxième direction, dans lequel
le premier convertisseur numérique-analogique (240), le deuxième convertisseur numérique-analogique (270) et le premier convertisseur analogique-numérique (250) fonctionnent chacun, lors de la conversion, avec une tension de référence (241, 251, 271) ;
**caractérisé par**
le réglage d'au moins deux des tensions de référence (241, 251, 271) du premier convertisseur numérique-analogique (240), du deuxième convertisseur numérique-analogique (270) et du premier convertisseur analogique-numérique (250) de telle sorte qu'elles soient dépendantes l'une de l'autre.
